Europäisches Patentamt

European Patent Office

Office européen des brevets

(11) Publication number: **0 405 706 A1**

# EUROPEAN PATENT APPLICATION

(21) Application number: 90301296.1

(22) Date of filing: 07.02.90

(51) Int. Cl.5: **G06F 15/80, G06F 15/16**

(30) Priority: **31.05.89 GB 8912465**

(43) Date of publication of application:
**02.01.91 Bulletin 91/01**

(84) Designated Contracting States:
**BE DE DK ES FR GR IT LU NL SE**

(71) Applicant: **GEC PLESSEY
TELECOMMUNICATIONS LIMITED
New Century Park P.O. Box 53
Coventry, CV3 1HJ(GB)**

(72) Inventor: **Lumb, Anthony Peter
63 Merlin Avenue
Nuneaton, Warwickshire(GB)**

(74) Representative: **Allen, Derek
The Plessey Company Limited Intellectual
Property Department Vicarage Lane
Ilford Essex, IG1 4AQ(GB)**

(54) Processor unit networks.

(57) A processor unit network suitable for forming a loosely coupled multi-processor using parallel bus connections and serial linkages. Processor units (1, 3, 5, 7, 9) being arranged into processor groups, each processor unit (1, 3, 5, 7, 9) of a processor group being serial linked to other members of the group and common processor units of each group being exclusively coupled to adjacent processor groups, for example processor unit $3''$ to processor units $3'$ and $3'''$.

EP 0 405 706 A1

# PROCESSOR UNIT NETWORKS

The present invention relates to processor unit networks.

It is known to connect processor units, for example central processor units (C.P.U), to form a loosely coupled multiprocessor. A loosely coupled multiprocessor is one where each CPU has exclusive access to its own memory. Communications between CPUs in a loosely coupled multiprocessor is only accomplished by the passing of messages, there is no sharing of memory between CPUs.

There is a requirement to provide a processor unit network or loosely coupled multi-processor that can remain operation when there is a hardware fault. Typically, such a processor network has been formed using either parallel buses or "point-to-point" serial links.

Parallel buses have a greater throughput in terms of the number of bytes of information transferred per second. However they require a large number of parallel interconnections which take up edge connectors on a printed circuit board. In order to provide fault tolerance, it is necessary to duplicate the bus which only serves to increase the requirement for edge connectors. Fault tolerance on duplicated buses is further complicated by having to ensure that no single fault can lead to the disabling of both buses. Certain faults on parallel buses can be difficult to diagnose. The number of CPUs which can be connected together on a parallel bus is generally limited to 20 or less.

"Point-to-point" serial links have a lower data transfer rate compared parallel buses, but the overall throughput can be increased by having more than one link. However it is difficult to increase the number of links to large numbers because of edge connector limitations. Thus the number of CPUs which can be connected by a full mesh interconnect topology is limited to N + 1. (Where N is the number of links to each CPU). They do have the advantage that faults on the serial link can be isolated. If it is required to increase the number of CPUs above N + 1, then there are different topologies available for example Hypercubes and braided rings. The main disadvantage of these topologies is the need to relay messages via intermediate nodes. This is not such a problem when the number of intermediate nodes is relatively small. However as the network increases in size, it is possible to use up large proportions of both the bandwidth of each serial link and the processing power of intermediate nodes, with transit messages. Balancing the message traffic evenly over the many serial links is particularly difficult in such networks. This is exacerbated by the need to be able to tolerate the failure of links.

It is an objective of the present invention to provide a processor unit network topology that substantially relieves the problems defined above.

According to the present invention there is provided a processor unit network comprising a plurality of processor units, the processor units being arranged into a plurality of processor unit groups, each processor unit being arranged to be serially coupled to each other processor unit within its group, and parallel buses are provided, each bus being arranged to be connected to a respective processor unit from each group.

Preferably, the processor groups are arranged into a serial plane or a braided ring. The processor units may be central processor units with respective memory means arranged to form a loosely coupled multi-processor.

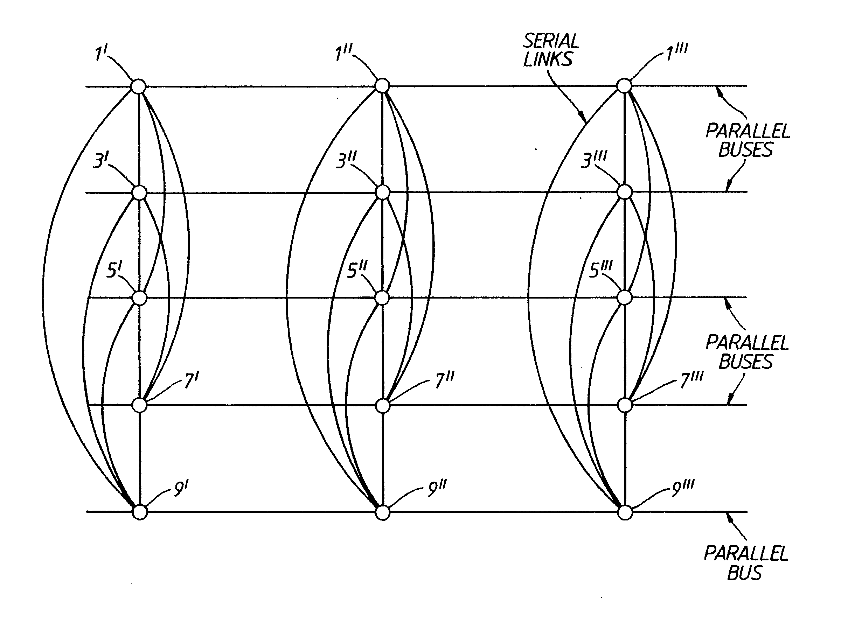

An embodiment of the present invention will now be described by way of example only with reference to the drawing, a schematic illustration of a processor unit network topography in accordance with the present invention.

Referring to the drawing, a plurality of processor units 1, 3, 5, 7, 9 are arranged into adjacent processor groups, each unit 1, 3, 5, 7, 9 are serially coupled by serial links to each other whilst parallel buses are provided to exclusively couple common processor units i.e. $3'$ to $3''$ to $3'''$. Although the drawing only illustrates processor groups consisting of 5 units and only three processor groups connected in parallel it will be appreciated that much larger networks can be readily constructed. Furthermore, it will be appreciated that certain individual serial links may be omitted from the network topography illustrated in the drawing whilst remaining operation due to the inherent design redundance to accommodate hardware faults.

Communication between CPUs in fault free conditions involves a maximum of one additional transit CPU. Routing between two CPUs in the general case would involve one serial link and one parallel bus. Choice of which to use first can be arbitrary, however if every CPU operates to the same rule, then the message load is automatically spread over the available serial links.

Under fault conditions this topology offers the tradeoff between routing complexity and loss of processing capacity. Take the case of a failure of a parallel bus. This is unlikely to cause the failure of the serial links to the CPUs on the bus, so communications between these CPUs can be maintained by relaying messages via the remaining working buses. These messages can be distributed over a number of working buses so as to minimise the extra load. Alternatively, it is possible to adopt a strategy which treats failure of the bus as a failure of all the CPUs on the bus. However this does lead to the loss of a large proportion of the processing power of the system.

In accordance with the present invention it is possible to establish a network comprising just two CPUs and additional CPUs added as and when required. Extension of the processor network can proceed in one of two dimensions depending on the requirements of the particular application. Starting with a pair of CPUs with a serial link between them (the minimum requirement for fault tolerance), it is possible to expand firstly by adding pairs of CPUs, one on each bus. Alternatively it is possible to expand the number of parallel buses first. The flexibility provided by having this ability is seen as being one of the advantages of this topology.

It will be understood, that although the drawing illustrates the processor groups in a serial plane with a full mesh interconnect, that alternative topology could be used, in particular a braided ring.

## Claims

1. A processor unit network comprising a plurality of processor units, these processor units being arranged into a plurality of processor unit groups, each processor unit being arranged to be serially coupled to each other processor unit within its group, and parallel buses are provided, each bus being arranged to be connected to a respective processor unit from each group.

2. A processor unit network as claimed in claim 1 wherein the processor groups are arranged in serial planes.

3. A processor unit network as claimed in claim 1 wherein the processor groups are arranged in braided rings.

4. A processor unit network as claimed in any preceding claim wherein the processor units are central processor units with respective memory means arranged to form a loosely coupled multiprocessor.

SERIAL LINKS

PARALLEL BUSES

PARALLEL BUSES

PARALLEL BUS

EP 0 405 706 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | 9TH ANNUAL SYMP. ON COMPUTER ARCHITECTURE, Austin, Texas, 26th - 29th April 1982, pages 90-98, IEEE, New York, US; L.N. BHUYAN et al.: "A general class of processor interconnection strategies" * Page 90, column 2, line 10 - page 92, column 1, line 21; figure 1; page 97, . column 2, lines 1-40 * | 1,2,4 | G 06 F 15/80 G 06 F 15/16 |
| A | PATENT ABSTRACTS OF JAPAN, vol. 6, no. 245 (P-159)[1123], 3rd October 1982; & JP-A-57 143 657 (FUJITSU K.K.) 04-09-1982 * Abstract; figure * | 1 | |
| A | IEEE INT. CONF. ON COMPUTER DESIGN: VLSI IN COMPUTERS, New York, 6th - 9th October 1986, pages 230-233, IEEE, New York, US; F. FRANZON: "Interconnect strategies for fault tolerant 2D VLSI arrays" * Page 231, column 1, lines 7-22; figure 4 * | 1,2,4 | |

TECHNICAL FIELDS
SEARCHED (Int. Cl.5)

G 06 F 15

The present search report has been drawn up for all claims

| Place of search | Date of completion of the search | Examiner |
|---|---|---|
| THE HAGUE | 25-09-1990 | BLIONAS S. |

EPO FORM 1503 03.82 (P04011)